# EUROPÄISCHE PATENTSCHRIFT

(11) **EP 3 818 605 B1**
(45) Veröffentlichungstag und Bekanntmachung des Hinweises auf die Patenterteilung: **03.12.2025**
(21) Anmeldenummer: 19739197.2
(22) Anmeldetag: 21.06.2019
(51) Int. Cl.: H02J 1/08, H02J 7/34, B60R 16/03, H02J 1/10

(54) **BORDNETZ FÜR EIN FAHRZEUG SOWIE FAHRZEUG**
VEHICLE ELECTRICAL SYSTEM FOR A VEHICLE, AND VEHICLE
RÉSEAU DE BORD POUR UN VÉHICULE AINSI QUE VÉHICULE

(30) Priorität: 03.07.2018 DE 102018210943
(43) Veröffentlichungstag der Anmeldung: 12.05.2021
(73) Patentinhaber: LEONI Bordnetz-Systeme GmbH, 97318 Kitzingen (DE)
(72) Erfinder: SCHNEIDER, Bernd, 97337 Dettelbach (DE); ÖCHSNER, Joachim, 97234 Reichenberg (DE); RAU, Markus, 97318 Kitzingen (DE)
(74) Vertreter: FDST Patentanwälte
(86) Internationale Anmeldenummer: PCT/DE2019/100573
(87) Internationale Veröffentlichungsnummer: WO 2020/007403

(56) Entgegenhaltungen:
- DE-A1- 102013 225 020
- DE-A1- 102014 207 993
- DE-A1- 102014 208 201
- DE-A1- 102015 222 544

## Beschreibung

Die Erfindung betrifft ein Bordnetz insbesondere ein Energiebordnetz für ein Fahrzeug sowie ein Fahrzeug mit einem derartigen Bordnetz.

Autonom fahrende Fahrzeuge, insbesondere elektromotorisch angetriebene Kraftfahrzeuge, welche automatisiert oder autonom fahren, weisen ein im Vergleich zu einem herkömmlichen Kraftfahrzeug umfangreicher ausgestaltetes Bordnetz auf. Das Bordnetz kann grundsätzlich aus einem elektrischen Energiebordnetz, welches für die Stromversorgung innerhalb oder außerhalb des Fahrzeuges zuständig ist, und einem Datenbordnetz, welches für die Datenübertragung oder Informationsübertragung innerhalb oder außerhalb eines Fahrzeuges zuständig ist bestehen. Neben diesen zwei Hauptbestandteilen können noch weitere andere Bestandteile unter dem Bordnetz subsumiert werden, die für weitere Aufgaben maßgeblich sind.

Hierbei steht die Bezeichnung "Fahrzeug" stellvertretend für alle Arten von insbesondere automatisiert oder autonom bewegten Transportmitteln zu Lande, zu Wasser oder in der Luft. Die Transportmittel dienen hierbei einem Transport von Waren und/oder Personen. So werden unter den Transportmitteln vorliegend beispielsweise auch autonom betriebene Fluggeräte, speziell Drohnen verstanden. Insbesondere handelt es sich bei dem Fahrzeug um ein Kraftfahrzeug für den Straßenverkehr. Speziell bei autonom fahrenden Kraftfahrzeugen für den Straßenverkehr müssen bestimmte Sicherheitsanforderungen erfüllt sein. Derartige Sicherheitsanforderungen sind beispielsweise sogenannte ASIL-Anforderungen (Automotive-Safety-Integrity-Level) beispielsweise gemäß der Norm ISO 26262.

Diese fordern beispielsweise eine redundante Auslegung des Bordnetzes zur Versorgung von sogenannten Fail-Operational-Funktionen. Derartige Fail-Operational-Funktionen sind zum Beispiel die Lenkung oder die Bremse des autonom fahrenden Kraftfahrzeuges. Um diese Anforderungen zu erfüllen, weisen derartige Bordnetze üblicherweise ein zumindest teilweise redundant ausgebildetes Teilnetz auf, welches redundante Verbraucher, die insbesondere die Fail-operational-Funktionen ausführen sollen, aufweist. Dieses redundante Teilnetz wird nachfolgend auch als Redundanz-Netz bezeichnet.

Allgemein wird z.B. durch die Norm ISO 26262 eine Einstufung von elektrischen / elektronischen Systemen in Kraftfahrzeugen in unterschiedliche Risikoklassen im Hinblick auf ihre sicherheitsrelevante Funktion vorgenommen. Systeme oder Komponenten mit erhöhten Sicherheitsanforderungen werden in verschiedenen ASIL-Klassen klassifiziert. Derartige Systeme oder Komponenten werden vorliegend als sicherheitsrelevante Verbraucher oder auch als ASIL-Verbraucher bezeichnet. Systeme oder Komponenten, die als nicht-sicherheitsrelevant eingeordnet werden, werden gemäß der Norm als QM (Quality Management) Komponenten und Systeme bezeichnet. Derartige Systeme oder Komponenten werden nachfolgend als nicht-sicherheitsrelevante Verbraucher, oder auch als QM-Verbraucher bezeichnet.

Tritt nun innerhalb des Bordnetzes ein Fehler, z.B. eine Unter- oder eine Überspannung auf, so wird das Redundanz-Netz mittels eines Trennelements, z.B. eines Schalters, vom restlichen Bordnetz abgetrennt. Somit wird sichergestellt, dass trotz des aufgetretenen Fehlerfalls die redundanten Verbraucher versorgt werden und somit die Fail-Operational-Funktionen weiter ausführbar sind. Zur Sicherstellung der Funktionsfähigkeit der redundanten Verbraucher ist im Redundanz-Netz eine Batterie zur Energieversorgung der Verbraucher angeordnet. Diese muss ausreichend dimensioniert sein und bestimmten ASIL-Sicherheitsanforderungen ("ASIL-Batterie") genügen, um die Aufrechterhaltung der Funktionsfähigkeit für eine vorgegebene Zeitdauer im Rahmen einer Not-Versorgung zuverlässig zu gewährleisten.

Aus der DE 10 2015 222 544 A1 ist ein Bordnetz für ein Fahrzeug zu entnehmen, bei dem ein ersten (Niederspannungs-) Teilnetz mit einem zweiten (Hochspannungs-) Teilnetz über einen Gleichspannungswandler verbunden ist. Im ersten Teilnetz sind zwei Kanäle vorgesehen, in denen jeweils ein sicherheitsrelevanter Verbraucher redundant angeordnet ist. Die beiden Teilnetze sind durch eine bidirektionale Schalteinrichtung voneinander trennbar.

Die DE 10 2014 208 201 A1 zeigt ein Bordnetz, bei dem ein erster sowie ein zweiter Pfad an einem Niederspannungs-Teilnetz angeschlossen sind. Die beiden Pfade sind über einen Schalter miteinander verbunden. Der eine Pfad ist dabei über einen Gleichspannungswandler mit dem Niederspannungs-Teilnetz verbunden. In den beiden Pfaden sind zueinander redundante Verbraucher angeordnet.

Aus der DE 10 2013 225 020 A1 sowie der DE 10 2014 207 993 A1 sind weitere Bordnetzstrukturen zu entnehmen.

Ausgehend hiervon liegt der Erfindung die Aufgabe zugrunde, ein Bordnetz für ein Kraftfahrzeug anzugeben, bei dem ein Redundanz-Netz, einfach, zuverlässig und kostengünstig realisierbar ist.

Die Aufgabe wird erfindungsgemäß gelöst durch ein Bordnetz für ein Kraftfahrzeug mit den Merkmalen des Anspruchs 1. Vorteilhafte Ausgestaltungen, Weiterbildungen und Varianten sind Gegenstand der Unteransprüche.

Das Bordnetz ist als ein Bordnetz für ein Fahrzeug, insbesondere für ein elektromotorisch angetriebenes Kraftfahrzeug für den Straßenverkehr ausgebildet. Unter dem elektromotorisch angetriebenen Kraftfahrzeug wird hierbei insbesondere ein Kraftwagen verstanden, welcher entweder einen hybriden Antrieb (z.B. Elektromotor und Verbrennungsmotor, sogenannte Mikrohybride, Mildhybride oder Plug-in-Hybride) aufweist oder einen reinen elektromotorischen Antrieb aufweist. Speziell handelt es sich bei dem Kraftfahrzeug um ein zumindest teilautomatisiert fahrendes, elektromotorisch angetriebenes Kraftfahrzeug. Der Fahrbetrieb wird gemäß z.B. der Norm SAE J 3016 in verschiedene sogenannte Driving Level (Stufe 0 (Fahrer fährt eigenständig) bis Stufe 5 (vollständiges autonomes Fahren)) eingeteilt. Vorliegend werden unter den Driving Level 3, 4 automatisierte bzw. unter dem Level 5 autonom bewegte Fahrzeuge verstanden.

Das Bordnetz weist einen ersten Bordnetzteil sowie einen zweiten Bordnetzteil auf. Bei dem ersten Bordnetzteil handelt es sich beispielsweise um einen Hochvoltteil. Bei dem zweiten Bordnetzteil handelt es sich beispielsweise um einen Niedervoltteil. Hierbei wird unter dem Hochvoltteil ein Teil des Bordnetzes verstanden, welcher üblicherweise mit einer Spannung mit einem Wert im Bereich von ≥60 Volt bis 500 und teilweise bis über 1000 Volt beaufschlagt ist. Der Hochvoltteil weist typischerweise die elektrischen Komponenten für den elektrischen Fahrbetrieb auf. Dies sind insbesondere mindestens ein elektrischer Fahrmotor, eine Leistungselektronik und eine Fahrbatterie. Unter dem Niedervoltteil wird hierbei ein Teil des Bordnetzes verstanden, welcher üblicherweise mit einer Spannung mit einem Wert im Bereich von 12 bis 60 Volt beaufschlagt ist. Somit weisen die beiden Bordnetzteile vorzugsweise unterschiedliche Spannungsebenen auf. Die beiden Bordnetzteile können jedoch auch eine gemeinsame Spannungsebene aufweisen und somit mit einer (gemeinsamen) Spannung beaufschlagt sein, die den gleichen Spannungswert (z.B. im Niedervoltbereich ein 48V-Antriebssystem) aufweist.

Der zweite Bordnetzteil weist ein Hauptnetz sowie ein Redundanz-Netz auf. Weiterhin weist das Bordnetz zumindest einen ersten sicherheitsrelevanten Verbraucher im Hauptnetz auf.

Unter dem zumindest einen sicherheitsrelevanten Verbraucher wird hierbei ein elektrischer Verbraucher des Kraftfahrzeuges verstanden, welcher im Gegensatz zum nicht-sicherheitsrelevanten Verbraucher, für die Sicherstellung eines zuverlässigen Fahrbetriebs, insbesondere eines (teil-)autonomen Fahrbetriebs des Fahrzeuges herangezogen wird. Diese Verbraucher können sogenannte fail-operational Funktionen, beinhalten, wie z.B. Lenk- und Bremsfunktionen.

Üblicherweise ist im Hauptnetz auch mindestens ein nicht-sicherheitsrelevanter Verbraucher angeordnet. Unter den nicht-sicherheitsrelevanten Verbrauchern werden hierbei beispielsweise elektrische Verbraucher verstanden, die nicht vorrangig für einen Fahrbetrieb des Fahrzeuges herangezogen werden. Somit werden unter dem mindestens einen nicht-sicherheitsrelevanten Verbraucher zum Beispiel ein Radio, ein Navigationssystem oder eine Klimaanlage verstanden.

Das Bordnetz weist weiterhin einen zum ersten sicherheitsrelevanten Verbraucher redundant ausgebildeten zweiten sicherheitsrelevanten Verbraucher auf, welcher im Redundanz-Netz angeordnet ist. Der zweite sicherheitsrelevante Verbraucher ist also aufgrund der redundanten Ausgestaltung für die gleiche Funktion wie der erste sicherheitsrelevante Verbraucher ausgebildet und ist bevorzugt baugleich oder identisch zum ersten sicherheitsrelevanten Verbraucher ausgebildet.

Um das Hauptnetz von dem Redundanz-Netz zu trennen (insbesondere in einem Fehlerfall) weist das Bordnetz zudem ein erstes Trennelement auf. Das erste Trennelement ist hierbei beispielsweise als ein Schalter, insbesondere als ein Halbleiterschalter oder als ein (Potential trennender) Spannungswandler ausgebildet.

Das Bordnetz umfasst weiterhin eine Energieversorgung für die Verbraucher. Die Energieversorgung für die Verbraucher umfasst ihrerseits einen Gleichspannungswandler, der mit dem ersten Bordnetzteil und dem zweiten Bordnetzteil verbunden und im Redundanz-Netz angeordnet ist. Über den Gleichspannungswandler ist eine Energieversorgung des Redundanz-Netzes sichergestellt, wenn dieses durch das Trennelement vom Hauptnetz getrennt ist. Bei dem Gleichspannungswandler handelt es sich hierbei um einen Gleichspannungswandler, welcher zur Wandlung insbesondere der Spannung des beispielsweise als Hochvoltteil ausgebildeten ersten Bordnetzteils in oder auf einen Spannungswert des beispielsweise als Niedervoltteil ausgebildeten zweiten Bordnetzteils ausgebildet ist. Dieser Gleichspannungswandler wird nachfolgend als erster Gleichspannungswandler bezeichnet.

Grundsätzlich ist durch diese Ausgestaltungsvariante eine Absicherung der Funktion des zumindest einen ersten sicherheitsrelevanten Verbrauchers erreicht, indem z.B. bei einem nicht rückwirkungsfreien Fehler des ersten sicherheitsrelevanten Verbrauchers mittels des Trennelements die beiden Netze (Hauptnetz und Redundanz-Netz) aufgetrennt werden. Der zu dem zumindest ersten sicherheitsrelevanten Verbraucher redundant ausgebildete zweite sicherheitsrelevante Verbraucher übernimmt in diesem Fall die Aufgaben des ausgefallenen ersten sicherheitsrelevanten Verbrauchers, um einen sicheren (Not-)Fahrbetrieb zu gewährleisten.

Ein wesentlicher Vorteil dieser Ausgestaltung liegt darin, dass der redundante zweite sicherheitsrelevante Verbraucher nicht wie z.B. üblicherweise mittels einer (ASIL-)Batterie mit elektrischer Leistung versorgt wird. Vielmehr ist durch die Anordnung des ersten Gleichspannungswandlers im Redundanz-Netz eine elektrische Versorgung des redundanten zweiten sicherheitsrelevanten Verbrauchers über den ersten Bordnetzteil erreicht. Speziell wird hierbei z.B. zumindest eine Fahrbatterien (auch als Antriebsbatterie bezeichnet) des Fahrzeuges, welche üblicherweise im als Hochvoltteil ausgebildeten ersten Bordnetzteil angeordnet ist, zu einer elektrischen Versorgung des redundanten zweiten sicherheitsrelevanten Verbrauchers herangezogen.

Durch die Versorgung des zweiten sicherheitsrelevanten Verbrauchers mittels des ersten Gleichspannungswandlers ist zunächst eine besonders einfache und insbesondere wartungsfreie Ausgestaltung des Bordnetzes ermöglicht.

Von besonderer Bedeutung ist weiterhin, dass die vergleichsweise große Energiemenge der zumindest einen Fahrbatterie für das Redundanz-Netz zur Verfügung steht, so dass die Aufrechterhaltung der sicherheitsrelevanten Funktionen für einen großen Zeitraum sichergestellt ist. Insgesamt ist hierdurch eine zeitliche Ausweitung der Verfügbarkeit erreicht, ohne dass eine ASIL-Batterie mit hoher Batteriekapazität erforderlich ist.

Mit einer derartigen Lösung werden auch die Anforderungen von an Kraftfahrzeughersteller gestellten Normen, insbesondere bezüglich eines autonomen Fahrbetriebs erfüllt. Derartige Normen sind gegenwärtig beispielsweise die sogenannten und zuvor genannten ASIL-Level, beispielsweise gemäß der ISO 26262. Derartige Normen beziehen sich speziell auf die Sicherheit und Anforderungen an Kraftfahrzeuge, die zu einem voll- oder teilautonomen Fahren ausgebildet sind. Vorzugsweise wird insgesamt auf eine Batterie im Redundanz-Netz verzichtet. Dieser Ausgestaltung liegt die Überlegung zugrunde, dass bisher eingesetzte (ASIL-) Batterien zum einen eine hohe Ausfallsicherheit aufweisen müssen, welche beispielsweise mittels eines kostenintensiven Batterie-Management-Systems realisiert wird. Zum anderen sind derartige Batterien wartungsintensiv. Durch den Verzicht auf eine derartige Batterie im Redundanz-Netz und der Anordnung des Gleichspannungswandlers zur elektrischen Versorgung des redundanten zweiten sicherheitsrelevanten Verbrauchers, wird das Redundanz-Netz und somit das gesamte Bordnetz, vorteilhaft aufwands- und kostenoptimiert.

Bevorzugt weist die Energieversorgung einen weiteren Gleichspannungswandler auf, der nachfolgend als zweiter Gleichspannungswandler bezeichnet ist und der mit dem ersten Bordnetzteil und dem zweiten Bordnetzteil verbunden ist. Dieser zweite Gleichspannungswandler ist im Hauptnetz angeordnet und dient der zumindest teilweisen Energieversorgung des Hauptnetzes. Im Fehlerfall, wenn also das Hauptnetz und das Redundanz-Netz voneinander getrennt sind, werden beide Teilnetze daher jeweils über einen Gleichspannungswandler und damit mit Energie aus dem beispielsweise als Hochvoltteil ausgebildeten ersten Bordnetzteil und damit vorzugsweise aus der zumindest einen Fahrbatterie versorgt Zweckdienlicherweise ist die Energieversorgung für den zweiten Bordnetzteil für eine vorgegebene Leistung ausgelegt. Die vorgegebene Leistung entspricht hierbei vorzugsweise einer Gesamtleistung für alle innerhalb des zweiten Bordnetzteils angeordneten elektrischen Verbraucher. Mit anderen Worten ist die vorgegebene Leistung die elektrische Leistung, die mindestens für eine elektrische Versorgung der innerhalb des zweiten Bordnetzteils angeordneten Verbraucher bereitgestellt werden muss.

Diese vorgegebene Leistung ist bevorzugt auf die beiden Gleichspannungswandler aufgeteilt. Die Aufteilung der vorgegebenen Leistung hat den Vorteil, dass die beiden Gleichspannungswandler jeweils ein geringeres (Einzel-)Leistungsvermögen aufweisen als im Vergleich zu einer Ausgestaltung, die lediglich ein Gleichspannungswandler für den zweiten Bordnetzteil vorsieht. Jeder der Gleichspannungswandler ist daher kleiner ausgelegt als bei der Verwendung nur eines Gleichspannungswandlers erforderlich wäre.

Gemäß einer zweckdienlichen Weiterbildung ist die vorgegebene Leistung auf die beiden Gleichspannungswandler gleichmäßig aufgeteilt. Hierbei wird unter gleichmäßig verstanden, dass der Gesamtwert der vorgegebenen Leistung zu möglichst gleichen Teilen auf die beiden Gleichspannungswandler aufgeteilt ist. Die beiden Gleichspannungswandler sind vorzugsweise identisch ausgebildet. Sie sind bevorzugt lediglich für die halbe Leistung ausgelegt, im Vergleich zu der Dimensionierung eines Gleichspannungswandlers, wenn nur ein Gleichspannungswandler eingesetzt wird. Im Fehlerfall eines der Wandler ist bevorzugt ein Energiemanagement zur Reduzierung der Bordnetzlast für den verbleibenden (Gleichspannungs-)Wandler und der (Fahr-)Batterie vorgesehen.

Bevorzugt handelt es sich - wie bereits zuvor erwähnt - bei den sicherheitsrelevanten Verbrauchern um Verbraucher zur Steuerung von Lenkfunktionen und/ oder Bremsfunktionen des Fahrzeugs. Hierdurch und insbesondere durch die redundante Ausgestaltung mittels des zweiten sicherheitsrelevanten Verbrauchers ist ein Fahrbetrieb des Fahrzeugs auch in einem Fehlerfall des elektrischen Bordnetzes sichergestellt.

Weiterhin weist das Hauptnetz ein erstes Unternetz sowie ein zweites Unternetz auf. Zumindest ein Teil der sicherheitsrelevanten Verbraucher ist im zweiten Unternetz angeordnet. Vorzugsweise sind alle sicherheitsrelevanten Verbraucher im zweiten Unternetz angeordnet und die nicht-sicherheitsrelevanten Verbraucher (QM-Verbraucher) sind vorzugsweise alle im ersten Unternetz angeordnet.

Die beiden Unternetze sind weiterhin mittels eines zweiten Trennelements voneinander trennbar. Bei dem zweiten Trennelement handelt es sich bevorzugt ebenfalls um z.B. ein Halbleiterschaltelement. Der zumindest eine erste sicherheitsrelevante Verbraucher ist hierbei im zweiten Unternetz angeordnet. Durch diese Aufteilung und insbesondere die Möglichkeit, die beiden Unternetze durch das zweite Trennelement voneinander zu trennen, ist eine weitere Absicherung des Bordnetzes erreicht. Das heißt, bei einem Fehler zumindest eines der nicht-sicherheitsrelevanten Verbraucher (QM-Verbraucher) wird mittels des zweiten Trennelements das erste Unternetz, in dem der ausgefallene nicht-sicherheitsrelevante Verbraucher angeordnet ist, von dem zweiten Unternetz getrennt. Hierdurch ist sichergestellt, dass der sich innerhalb des zweiten Unternetzes befindliche sicherheitsrelevante Verbraucher nicht von Rückwirkungen des ausgefallenen fehlerhaften, nicht-sicherheitsrelevanten Verbrauchers beeinträchtigt wird.

Ergänzend ist hierbei vorzugsweise auch vorgesehen, die einzelnen nicht-sicherheitsrelevanten Verbraucher mittels eines Sicherungselementes, beispielsweise mittels herkömmlichen Schmelzsicherungen abzusichern. Hierdurch ist gewährleistet, dass in einem Fehlerfall des ersten Unternetzes, insbesondere eines der darin angeordneten nicht-sicherheitsrelevanten Verbrauchers, das jeweilige Sicherungselement des fehlerhaften nicht-sicherheitsrelevanten Verbrauchers auslöst und diesen somit vorzugsweise galvanisch von dem ersten Unternetz trennt.

Im ersten Unternetz ist eine Bordnetzbatterie angeordnet. Über diese ist insbesondere eine unterbrechungsfreie Versorgung der QM-Verbraucher gewährleistet, selbst wenn das Unternetz von dem restlichen Hauptnetz getrennt ist. Das Unternetz, in dem vorzugsweise ausschließlich und / oder alle nicht sicherheitsrelevanten Verbraucher angeordnet sind, ist daher ein autarkes Teilnetz, welches über die Bordnetzbatterie versorgt werden kann.

Hierdurch wird insbesondere auch der Ausfall von Komfortverbraucher auf ein Minimum reduziert. Unter Komfortverbraucher sind Verbraucher im Fahrzeug zu verstehen, die keine sicherheitsrelevante Funktion aufweisen und lediglich nur eine Komfortfunktion darstellen, die einem Fahrzeuginsassen eine Funktion, die über die Grundfunktionen des Fahrzeugs hinausgehen, anbietet und zum Wohlbefinden des Insassen beitragen. Typische Komfortverbraucher sind beispielsweise elektrische Fensterheber, Sitzheizungen, Standheizungen, Infotainment-Komponenten wie Navigationssysteme, Radio und Telefon, elektrische Servolenkung, PTC-Zuheizer und viele andere Systeme bzw. Komponenten.

Mittels des zweiten Trennelements kann das erste Unternetz erneut mit dem zweiten Unternetz verbunden werden, wodurch die Bordnetzbatterie weiterhin geladen wird und ihre Funktion als dynamischer Energiespeicher für das Gesamtbordnetz fortsetzt.

Die Bordnetzbatterie ist hierbei bevorzugt als eine herkömmliche einfache Batterie (z.B. Blei-Säure)ausgebildet. Speziell ist sie vorzugsweise als Bleibatterie oder NiCd- oder Ni/Mh-Batterie ausgebildet. Hierdurch ist eine einfache und kostengünstige elektrische Energieversorgung der nicht-sicherheitsrelevanten Verbraucher und im zugeschalteten Zustand eine Pufferung von dynamischen Bordnetzanteilen im Bordnetz sichergestellt und ermöglicht. Es wird insbesondere auf eine (aufwändige) ASIL-Batterie, verzichtet. Bevorzugt ist im gesamten Niedervoltteil keine derartige ASIL-Batterie angeordnet. Sämtliche sicherheitsrelevante ASIL Verbraucher werden über die Gleichspannungswandler mit Energie versorgt.

Weiterhin ist bevorzugt lediglich eine einzige solche Bordnetzbatterie innerhalb des gesamten Niedervoltteils des Bordnetzes vorgesehen.

Die Aufgabe wird erfindungsgemäß weiterhin gelöst durch ein Fahrzeug mit den Merkmalen des Anspruchs 8. Bei dem Kraftfahrzeug handelt es sich insbesondere um ein Kraftfahrzeug, welches das zuvor beschriebene Bordnetz aufweist. Weiterhin weist das Fahrzeug ein Fahrerassistenzsystem und/oder ein Fahrsystem nach SAE Level 3 bis 5 für ein zumindest teilautomatisiertes Fahren auf.

Die im Hinblick auf das Bordnetz aufgeführten Vorteile und bevorzugten Ausgestaltungen sind sinngemäß auf das Kraftfahrzeug zu übertragen und umgekehrt.

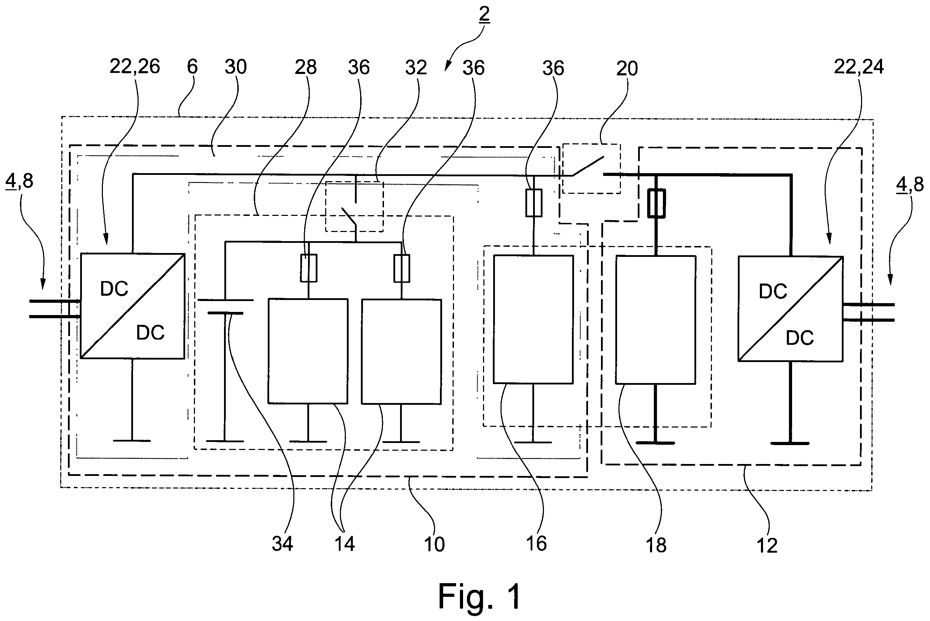

Ein Ausführungsbeispiel der Erfindung wird nachfolgend anhand der Figur näher erläutert. Diese zeigt in einer schematischen Darstellung ein skizziertes Schaltbild eines als Energiebordnetz ausgebildeten Bordnetzes.

Das in der Figur gezeigte Bordnetz 2 für ein nicht dargestelltes Fahrzeug weist einen als Hochvoltteil ausgebildeten ersten Bordnetzteil 4 sowie einen als Niedervoltteil ausgebildeten zweiten Bordnetzteil 6 auf. Der als Hochvoltteil ausgebildete erste Bordnetzteil 4 ist im Ausführungsbeispiel lediglich durch Anschlüsse 8 repräsentativ dargestellt. Der als Niedervoltteil ausgebildete zweite Bordnetzteil 6 unterteilt sich wiederum in ein Hauptnetz 10 und ein Redundanz-Netz 12. Im Folgenden werden der Einfachheit halber der erste Bordnetzteil 4 auch als Hochvoltteil und der zweite Bordnetzteil 6 auch als Niedervoltteil 6 bezeichnet. Die Unterschiedlichen Bezeichnungen sind auf die möglichen unterschiedlichen Spanungsebenen, auf bzw. mit denen die beiden Bordnetzteile 4,6 betrieben werden zurückzuführen. Alternativ können die beiden Bordnetzteile 4,6 auch eine gemeinsame und somit vorzugsweise gleiche Spannungsebene (z.B. bei einem 48V-Antriebssystem) aufweisen.

Das Bordnetz 2 weist mehrere nicht-sicherheitsrelevante Verbraucher 14, auch als QM-Verbraucher bezeichnet, sowie zumindest einen ersten sicherheitsrelevanten Verbraucher 16 im Hauptnetz 10 auf. Bei den nicht-sicherheitsrelevanten Verbrauchern 14 handelt es sich beispielsweise um eine Klimaanlage, Heckscheibenheizung oder vergleichbare typische Bordnetzfunktionen. Bei dem zumindest einen ersten sicherheitsrelevanten Verbraucher 16 handelt es sich im Ausführungsbeispiel um einen insbesondere für den Fahrbetrieb des Kraftfahrzeugs notwendigen und sicherheitsrelevanten Verbraucher, über den z.B. eine Lenkfunktion und/oder eine Bremsfunktion gesteuert wird. Aufgrund des sicherheitsrelevanten Aspekts der sicherheitsrelevanten Verbraucher 16 werden diese auch als sogenannte ASIL-Verbraucher bezeichnet. Unter ASIL-Verbraucher wird hierbei ein Verbraucher, insbesondere ein sicherheitsrelevanter Verbraucher verstanden, der z.B. die Anforderungen der ISO 26262 erfüllt.

Weiterhin weist das Bordnetz 2 einen zum ersten sicherheitsrelevanten Verbraucher 16 redundanten zweiten sicherheitsrelevanten Verbraucher 18 im Redundanz-Netz 12 auf. Der zweite sicherheitsrelevante Verbraucher 18 ist im Ausführungsbeispiel aufgrund der redundanten Ausgestaltung beispielsweise identisch zum ersten sicherheitsrelevanten Verbraucher 16 ausgebildet. Diese redundante Ausgestaltung beruht ebenfalls auf Anforderungen der bereits genannten Norm. Üblicherweise sind im Niedervoltteil 6 mehrere derartige sicherheitsrelevante erste Verbraucher 16 sowie jeweils hierzu redundant ausgebildete zweite sicherheitsrelevante Verbraucher 18 angeordnet.

Das Bordnetz 2 weist ein erstes Trennelement 20, beispielsweise ein Schaltelement, speziell ein Halbleiterschaltelement auf. Das erste Trennelement 20 dient zum Trennen des Hauptnetzes 10 von dem Redundanz-Netz 12. Dieser Ausgestaltung liegt der Gedanke zugrunde, in einem Fehlerfall innerhalb des Hauptnetzes 10, dieses vom Redundanz-Netz 12 zu trennen, sodass sich aufgrund des Fehlerfalls bedingte (elektrische) Rückwirkungen (z.B. eine Über- oder Unterspannung die im Hauptnetz 10 auftritt) nicht auf das Redundanz-Netz 12 übertragen. Hierdurch bleibt die Funktion des zweiten sicherheitsrelevanten Verbrauchers 18 auch in einem Fehlerfall des Hauptnetzes 10 erhalten. Mit anderen Worten wird hierdurch die sicherheitsrelevante Funktion nicht beeinträchtigt.

Weiterhin weist das Bordnetz 2 eine Energieversorgung 22 für die Verbraucher 16,18 auf. Die Energieversorgung 22 umfasst einen ersten Gleichspannungswandler 24, auch als DC/DC-Wandler bezeichnet, der mit dem Hochvoltteil 4 und dem Niedervoltteil 6 verbunden ist. Der erste Gleichspannungswandler 24 ist im Redundanz-Netz 12 angeordnet. Über den ersten Gleichspannungswandler 24 ist somit eine Energieversorgung des Redundanz-Netzes 12 sichergestellt, wenn dieses durch das erste Trennelement 20 vom Hauptnetz 10 getrennt ist. Das heißt, der erste Gleichspannungswandler 24 versorgt im getrennten Zustand der beiden Netze10, 12 den zweiten sicherheitsrelevanten Verbraucher 18. Durch diese Ausgestaltung kann auf eine wartungsintensive und teure (ASIL-) Batterie im Redundanz-Netz 12 zur Versorgung des zweiten sicherheitsrelevanten Verbrauchers 18 verzichtet werden.

Der erste Gleichspannungswandler 24 ist derart ausgebildet und eingerichtet, eine Betriebsspannung des Hochvoltteils 4 auf eine Betriebsspannung des Niedervoltteils 6 zu wandeln. Hierdurch ist weiterhin der Vorteil erreicht, über den ersten Gleichspannungswandler 24 mittelbar beispielsweise die Fahrbatterien des Kraftfahrzeuges, die den Hochvoltteil 4 mit Energie versorgen, für eine Energieversorgung des Redundanz-Netzes heranzuziehen. Hierdurch wird eine Reichweite des Kraftfahrzeuges in einem Fehlerfall des Hauptnetzes 10 erhöht, da die erwähnten Fahrbatterien üblicherweise eine höhere Ladekapazität im Vergleich zu innerhalb des Redundanz-Netzes 12 angeordneten Batterien aufweisen. Der Hochvoltteil 4 ist hierbei beispielsweise als ein Batteriespeicher (Fahrbatterien) mit mindestens zwei voneinander im Sinne der Funktionalen Sicherheit unabhängigen Teilen ausgebildet, von denen jeweils einer der genannten Gleichspannungswandler versorgt wird.

Weiterhin umfasst die Energieversorgung 22 des Bordnetzes 2 einen zweiten Gleichspannungswandler 26, der ebenfalls mit dem Hochvoltteil 4 und dem Niedervoltteil 6 verbunden ist und im Hauptnetz 10 angeordnet ist. Der zweite Gleichspannungswandler 26 dient zur zumindest teilweisen Energieversorgung des Hauptnetzes 10.

Die beiden Gleichspannungswandler 24,26 sind im Ausführungsbeispiel für eine Energieversorgung des Niedervoltteils 6 und insbesondere hierbei für eine vorgegebene Leistung ausgelegt. Unter der vorgegebenen Leistung wird hierbei eine erforderlich elektrische Mindestleistung verstanden, die zum dauerhaften Betrieb der Verbraucher 14,16,18 notwendig ist. Speziell ist die vorgegebene Leistung auf die beiden Gleichspannungswandler 24,26 aufgeteilt. Insbesondere ist die vorgegebene Leistung hierbei gleichmäßig auf die beiden Gleichspannungswandler 24,26 aufgeteilt.

Das Hauptnetz 10 weist im Ausführungsbeispiel ein erstes Unternetz 28 sowie ein zweites Unternetz 30 auf. Zumindest ein Teil, im Ausführungsbeispiel alle nicht-sicherheitsrelevanten Verbraucher 14, sind im ersten Unternetz 28 angeordnet. Entsprechend sind im Ausführungsbeispiel der zweite Gleichspannungswandler 26 sowie der sicherheitsrelevante Verbraucher 16 im zweiten Unternetz 30 angeordnet. Die beiden Unternetze 28,30 sind weiterhin über ein zweites Trennelement 32 voneinander trennbar. Dieser Ausgestaltung liegt der Gedanke zugrunde, das erste Unternetz 28 im Fall eines (elektrischen) Fehlers einer der nicht-sicherheitsrelevanten Verbraucher 14 von dem zweiten Unternetz 30 zu trennen, um Rückwirkungen des Fehlers auf das zweite Unternetz 30 zu verhindern.

Zur Versorgung der nicht-sicherheitsrelevanten Verbraucher 14, insbesondere im getrennten Zustand des ersten Unternetzes 28 vom zweiten Unternetz 30, weist das erste Unternetz 28 eine Bordnetzbatterie 34 auf. Die Bordnetzbatterie 34 ist im Ausführungsbeispiel beispielsweise als eine herkömmliche "Bleibatterie" ausgebildet.

Ergänzend ist den nicht-sicherheitsrelevanten Verbrauchern 14 und/oder den sicherheitsrelevanten Verbrauchern 16,18 jeweils ein Sicherungselement 36 vorgeschaltet. Bei dem Sicherungselement 36 handelt es sich beispielsweise um eine herkömmliche Schmelzsicherung. Durch das Sicherungselement 36 ist insbesondere im ersten Unternetz 28 ein sicheres Trennen eines beispielsweise fehlerbehafteten Verbrauchers 14 gewährleistet. Das heißt, im Fehlerfall, beispielsweise bei einer Überspannung, trennt das zweite Trennelement 32 das erste Unternetz 28 vom zweiten Unternetz 30. Das jeweilige Sicherungselement 36 des fehlerbehafteten Verbrauchers 14 trennt diesen vom ersten Unternetz 28, sodass anschließend ein erneutes Zuschalten des ersten Unternetzes 28 an das zweite Unternetz 30 über das zweite Trennelement 32 erfolgen kann. Aufgrund der Energieversorgung der nicht-sicherheitsrelevanten Verbraucher 14 mittels der Bordnetzbatterie 34 - insbesondere auch im getrennten Zustand der beiden Unternetze 28,30 - erfolgt dieses Trennen und erneute Zuschalten bevorzugt unbemerkt für einen Fahrer des Kraftfahrzeuges und vorzugsweise unterbrechungslos.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Bordnetz
- 4: erster Bordnetzteil
- 6: zweiter Bordnetzteil
- 8: Anschluss
- 10: Hauptnetz
- 12: Redundanz-Netz
- 14: nicht-sicherheitsrelevanter Verbraucher
- 16: sicherheitsrelevanter Verbraucher
- 18: zweiter sicherheitsrelevanter Verbraucher
- 20: erstes Trennelement
- 22: Energieversorgung
- 24: erster Gleichspannungswandler
- 26: zweiter Gleichspannungswandler
- 28: erstes Unternetz
- 30: zweites Unternetz
- 32: zweites Trennelement
- 34: Bordnetzbatterie
- 36: Sicherungselement

## Patentansprüche

1. Bordnetz (2) für ein Fahrzeug mit
- einem ersten Bordnetzteil (4) und einem zweiten Bordnetzteil (6), wobei der zweite Bordnetzteil (6) ein Hauptnetz (10) und ein Redundanz-Netz (12) aufweist,
- mit zumindest einem ersten sicherheitsrelevanten Verbraucher (16) im Hauptnetz (10),
- mindestens einem zum ersten sicherheitsrelevanten Verbraucher (16) redundanten zweiten sicherheitsrelevanten Verbraucher (18) im Redundanz-Netz (12),
- einem ersten Trennelement (20) zum Trennen des Hauptnetzes (10) von dem Redundanz-Netz (12),
- einer Energieversorgung (22) für die Verbraucher (14,16), die einen Gleichspannungswandler (24) umfasst, der mit dem ersten Bordnetzteil (4) und dem zweiten Bordnetzteil (6) verbunden und im Redundanz-Netz (12) angeordnet ist, so dass über den ersten Gleichspannungswandler (24) eine Versorgung des Redundanz-Netzes (12) mit elektrischer Energie sichergestellt ist, wenn dieses durch das erste Trennelement (20) vom Hauptnetz (10) getrennt ist, wobei
- im Hauptnetz (10) nicht-sicherheitsrelevante Verbraucher (14) angeordnet sind und das Hauptnetz (10) ein erstes Unternetz (28) und ein zweites Unternetz (30) aufweist und zumindest ein Teil der nicht-sicherheitsrelevanten Verbraucher (14) im ersten Unternetz (28) und zumindest ein Teil der sicherheitsrelevanten Verbraucher (16) im zweiten Unternetz (30) angeordnet sind,
- das zweite Bordnetzteil (6) eine Bordnetzbatterie (34) aufweist, die in dem ersten Unternetz (28) angeordnet ist,
**gekennzeichnet durch**
ein zweites Trennelement (32), wobei die beiden Unternetze (28,30) durch das zweite Trennelement (32) voneinander trennbar sind und das Trennelement (32) dazu eingerichtet ist, das erste Unternetz (28) im Falle eines Fehlers eines der nicht-sicherheitsrelevanten Verbraucher (14) von dem zweiten Unternetz (30) zu trennen, um Rückwirkungen des Fehlers auf das zweite Unternetz (30) zu verhindern.

2. Bordnetz (2) nach Anspruch 1,
wobei auf eine Batterie im Redundanz-Netz (12) verzichtet ist.

3. Bordnetz (2) nach einem der vorhergehenden Ansprüche,
wobei die Energieversorgung (22) einen weiteren Gleichspannungswandler (26) umfasst, der mit dem ersten Bordnetzteil (4) und dem zweiten Bordnetzteil (6) verbunden ist und im Hauptnetz (10) angeordnet ist und zur zumindest teilweisen Versorgung des Hauptnetzes (10) mit elektrischer Energie dient.

4. Bordnetz (2) nach Anspruch 3,
wobei die Energieversorgung (22) für den zweiten Bordnetzteil (6) für eine vorgegebene Leistung ausgelegt ist, welche auf die Gleichspannungswandler (24,26) aufgeteilt ist.

5. Bordnetz (2) nach dem vorhergehenden Anspruch,
wobei die vorgegebene Leistung gleichmäßig auf die Gleichspannungswandler (24,26) aufgeteilt ist.

6. Bordnetz (2) nach einem der vorhergehenden Ansprüche,
wobei es sich bei den sicherheitsrelevanten Verbrauchern (16,18) um Verbraucher zur Steuerung von Lenkfunktionen und/oder Bremsfunktionen handelt.

7. Bordnetz (2) nach einem der vorhergehenden Ansprüche,
wobei die Bordnetzbatterie (34) als eine Bleibatterie oder eine NiCd / NiMh-Batterie ausgebildet ist.

8. Fahrzeug mit einem Bordnetz (2) nach einem der vorhergehenden Ansprüche mit einem Fahrerassistenzsystem und/oder einem Fahrsystem nach SAE Level 3 bis 5 für ein zumindest teilautomatisiertes Fahren.

## Claims

1. An on-board network (2) for a vehicle, with
- a first on-board network part (4) and a second on-board network part (6), wherein the second on-board network part (6) has a main network (10) and a redundancy network (12),
- with at least one first safety-relevant consumer (16) in the main network (10),
- at least one second safety-related consumer (18), redundant with respect to the first safety-related consumer (16), in the redundancy network (12),
- a first separation element (20) for the separation of the main network (10) from the redundancy network (12),
- an energy supply (22) for the consumers (14, 16), which comprises a direct voltage converter (24) which is connected to the first on-board network part (4) and to the second on-board network part (6) and is arranged in the redundancy network (12), such that a supply of electrical energy to the redundancy network (12) is ensured by the first direct voltage converter (24) when this network is separated from the main network (10) by the first separating element (20), wherein
- non-safety-related consumers (14) are arranged in the main network (10) and the main network (10) has a first sub-network (28) and a second sub-network (30) and at least some of the non-safety-related consumers (14) are arranged in the first sub-network (28) and at least some of the safety-related consumers (16) are arranged in the second sub-network (30),
- the second on-board network part (6) has an on-board network battery (34) which is arranged in the first sub-network (28),
**characterized by**
a second separating element (32), wherein the two sub-networks (28, 30) are separable from each other by the second separating element (32) and the separating element (32) is configured to separate the first sub-network (28) from the second sub-network (30) in the event of a fault in one of the non-safety-related consumers (14), in order to prevent feedback effects of the fault on the second sub-network (30).

2. The on-board network (2) according to claim 1,
wherein no battery is used in the redundancy network (12).

3. The on-board network (2) according to any one of the preceding claims, wherein the energy supply (22) comprises an additional direct voltage converter (26) which is connected to the first on-board network part (4) and to the second on-board network part (6) and is arranged in the main network (10) and serves to at least partially supply the main network (10) with electrical energy.

4. The on-board network (2) according to claim 3,
wherein the power supply (22) for the second on-board network part (6) is configured for a pre-established power which is distributed between the direct voltage converters (24, 26).

5. The on-board network (2) according to the preceding claim,
wherein the pre-established power is distributed uniformly between the direct voltage converters (24, 26).

6. The on-board network (2) according to any one of the preceding claims,
wherein the safety-related consumers (16, 18) are consumers for controlling steering functions and/or braking functions.

7. The on-board network (2) according to any one of the preceding claims,
wherein the on-board network battery (34) is configured as a lead-acid battery or a NiCd/NiMh battery.

8. A vehicle with an on-board network (2) according to any one of the preceding claims, with a driver assistance system and/or a driving system according to SAE level 3 to 5 for at least partially automated driving.

## Revendications

1. Réseau de bord (2) pour un véhicule, comportant
- une première partie (4) de réseau de bord et une deuxième partie (6) de réseau de bord, la deuxième partie (6) de réseau de bord comportant un réseau principal (10) et un réseau de redondance (12),
- comportant dans le réseau principal (10) au moins un premier consommateur (16) concernant la sécurité,
- au moins un deuxième consommateur (18) concernant la sécurité, redondant par rapport au premier consommateur (16) concernant la sécurité, dans le réseau de redondance (12),
- un premier élément de séparation (20) destiné à la séparation du réseau principal (10) d'avec le réseau de redondance (12),
- une alimentation en énergie (22) pour les consommateurs (14, 16), qui comprend un convertisseur de tension continue (24) qui est relié à la première partie (4) de réseau de bord et à la deuxième partie (6) de réseau de bord et est disposé dans le réseau de redondance (12), de sorte qu'une alimentation du réseau de redondance (12) en énergie électrique est assurée par le premier convertisseur de tension continue (24) lorsque ce réseau est séparé du réseau principal (10) par le premier élément de séparation (20), dans lequel
- des consommateurs (14) ne concernant pas la sécurité sont disposés dans le réseau principal (10) et le réseau principal (10) comporte un premier sous-réseau (28) et un deuxième sous-réseau (30) et au moins une partie des consommateurs (14) ne concernant pas la sécurité sont disposés dans le premier sous-réseau (28) et au moins une partie des consommateurs (16) concernant la sécurité sont disposés dans le deuxième sous-réseau (30),
- la deuxième partie (6) de réseau de bord comporte une batterie (34) de réseau de bord qui est disposée dans le premier sous-réseau (28),
**caractérisé par**
un deuxième élément de séparation (32), les deux sous-réseaux (28, 30) pouvant être séparés l'un de l'autre par le deuxième élément de séparation (32) et l'élément de séparation (32) étant conçu pour séparer le premier sous-réseau (28) du deuxième sous-réseau (30) dans le cas d'un défaut d'un des consommateurs (14) ne concernant pas la sécurité, afin d'empêcher des effets de retour du défaut sur le deuxième sous-réseau (30).

2. Réseau de bord (2) selon la revendication 1,
dans lequel aucune batterie n'est utilisée dans le réseau de redondance (12).

3. Réseau de bord (2) selon l'une quelconque des revendications précédentes, dans lequel l'alimentation en énergie (22) comprend un convertisseur de tension continue supplémentaire (26) qui est relié à la première partie (4) de réseau de bord et à la deuxième partie (6) de réseau de bord et est disposé dans le réseau principal (10) et sert à l'alimentation au moins partielle du réseau principal (10) en énergie électrique.

4. Réseau de bord (2) selon la revendication 3,
dans lequel l'alimentation en énergie (22) pour la deuxième partie (6) de réseau de bord est conçue pour une puissance préétablie qui est répartie entre les convertisseurs de tension continue (24, 26).

5. Réseau de bord (2) selon la revendication précédente,
dans lequel la puissance préétablie est répartie uniformément entre les convertisseurs de tension continue (24, 26).

6. Réseau de bord (2) selon l'une quelconque des revendications précédentes, dans lequel pour ce qui est des consommateurs (16, 18) concernant la sécurité il s'agit de consommateurs destinés à la commande de fonctions de direction et/ou fonctions de freinage.

7. Réseau de bord (2) selon l'une quelconque des revendications précédentes, dans lequel la batterie (34) de réseau de bord est configurée sous forme d'une batterie au plomb ou d'une batterie NiCd / NiMh.

8. Véhicule comportant un réseau de bord (2) selon l'une quelconque des revendications précédentes, comportant un système d'assistance au conducteur et/ou un système de conduite selon SAE de niveau 3 à 5 pour une conduite au moins partiellement automatisée.
